# FASCICULE DE BREVET EUROPEEN

(11) **EP 0 683 004 B1**
(45) Date de publication et mention de la délivrance du brevet: **18.11.1998**
(21) Numéro de dépôt: 95107464.0
(22) Date de dépôt: 17.05.1995
(51) Int. Cl.: B23D 35/00

(54) **Dispositif pour la manutention et le réglage des outils d'une presse à découper**
Wechselvorrichtung für die Werkzeuge einer Schneidvorrichtung
Apparatus for handling and positioning tools in a cutting press

(30) Priorité: 20.05.1994 CH 1585/94
(43) Date de publication de la demande: 22.11.1995
(73) Titulaire: BOBST S.A., 1001 Lausanne (CH)
(72) Inventeur: Varidel, Charly, CH-1052 Le Mont (CH); Steiner, Jean-Pierre, CH-1023 Crissier (CH)
(74) Mandataire: Colomb, Claude

(56) Documents cités:
- EP-A- 0 458 065
- WO-A-86/01444

## Description

La présente invention a pour objet un dispositif pour la manutention et le réglage des outils d'une presse à découper du papier ou du carton, notamment pour la manutention des outils de la station de découpage et pour la manutention et le réglage des outils de la station d'éjection de ladite presse à platines, comprenant un chariot déplacable devant celle-ci.

En règle générale, une presse à découper destinée à la confection de découpes de boîtes pliables se compose de plusieurs stations disposées l'une à la suite de l'autre. Dans l'ordre, ces stations sont : une station de marge ou d'introduction, une station de découpage, une station d'éjection et, finalement, une station de réception.

La station de découpage d'une telle presse comprend généralement une paires de bras s'étendant perpendiculairement au bâti de la presse, du côté de l'utilisateur de celle-ci. Dans une forme d'exécution, par exemple dans le cas de machines travaillant des petits formats de feuilles, ces bras s'étendent en permanence perpendiculairement à la face du bâti

Chacun de ces bras comporte, sur sa face intérieure, deux glissières dans lesquelles les outils de découpage sont coulissés lors de leur extraction de la station de découpage. Un nouveau travail devant être réalisé par la presse à platines nécessite le remplacement des anciens outils par de nouveaux outils adaptés au nouveau travail.

Dans les dispositifs connus à ce jour, le remplacement ou le changement des outils de découpage s'effectue déjà à l'aide d'un chariot auxiliaire comprenant deux longerons montés en opposition entre deux bâtis latéraux. Ces longerons comportent, sur leurs faces intérieures, deux coulisses dont une paire est destinée à recevoir un nouvel outil. Au moment du changement de travail, on amène le chariot en face de l'ouverture des bras de la station de découpage, après avoir retiré sur ceux-ci l'un des outils préalablement utilisé dans la presse à platines. Ensuite, on introduit cet outil dans la paire de coulisses laissée libre du chariot, on verrouille cet outil en position horizontale dans ses coulisses et l'on fait pivoter de 180 degrés, dans un plan vertical, l'ensemble constitué par le nouvel outil, l'outil utilisé et les longerons, de façon à ce que le nouvel outil viennent se positionner exactement en face des glissières des bras, on libère le nouvel outil de ses verrouillages et on peut alors l'insérer dans la station de découpage où il sera à nouveau verrouillé. Il faudra ensuite retirer le chariot de devant la machine puis le décharger de l'ancien outil de manière à pouvoir le charger avec le deuxième nouvel outil de découpage et recommencer l'opération. Dans ce genre de dispositifs, le chariot est presque toujours déplacé perpendiculairement par rapport à la station de découpage.

La station d'éjection de la presse à découper comprend elle-aussi des outils d'éjection qui devront obligatoirement être échangés lors du passage à un autre travail. jusqu'à présent, on procédait manuellement à cet échange. Cependant, vu la dimension et le poids relativement important de ces outils, cette opération nécessitait deux personnes.

Cette façon de faire présente, entre autres, l'inconvénient de devoir effectuer des chargements et des déchargements d'outils sur un chariot pour les outils de découpage et des chargements et des manutentions effectués par deux personnes, ce qui prend un temps relativement long ayant une influence défavorable sur le rendement de production de la presse à découper qui doit être à l'arrêt pendant toute l'opération. On peut encore relever le fait que les outils d'éjection sont stockés dans des magasins disposés dans la surface de travail située devant la presse, ce qui est néfaste pour l'utilisation de celle-ci de par la réduction de la mobilité de ses utilisateurs. De plus, dans le cas des outils d'éjection, il est nécessaire d'utiliser des outils d'éjection préalablement réglés sur un dispositif de réglage indépendant ce qui constitue un investissement supplémentaire pour l'utilisateur de la presse.

Il convient donc, pour augmenter la production globale d'une presse à platines, tout en améliorant les coûts entraînés par l'utilisation d'une installation de manutention et de réglage, de réduire au maximum les temps d'arrêt dûs aux réglages et aux changements de travaux et de libérer l'espace libre devant la presse après l'échange des différents outils de découpage et d'éjection de la presse à découper.

Le but de la présente invention consiste à supprimer les inconvénients précités. A cet effet, l'invention a pour objet un dispositif conforme à ce qu'énonce la revendication 1.

L'invention sera mieux comprise à l'étude de l'une de ses formes d'exécution illustrées à l'aide des dessins annexés dans lesquels :
La figure 1 est une vue générale en perspective d'une presse à découper équipée d'un dispositif de manutention et de réglage,
La figure 2 est une vue en perspective d'un dispositif de manutention et de réglage,
La figure 3 est une vue de face en élévation d'un dispositif de manutention et de réglage.
La figure 4 est une vue en coupe selon IV-IV de la figure 3,
La figure 5 est une vue en coupe sel on V-V de la figure 3.
La figure 6 est une vue en coupe partielle du dispositif de verrouillage du faux cadre par rapport aux cadres-support et,
La figure 7 montre une forme d'exécution du dispositif de verrouillage permettant d'assurer la position angulaire du magasin rotatif supportant les outils d'éjection.

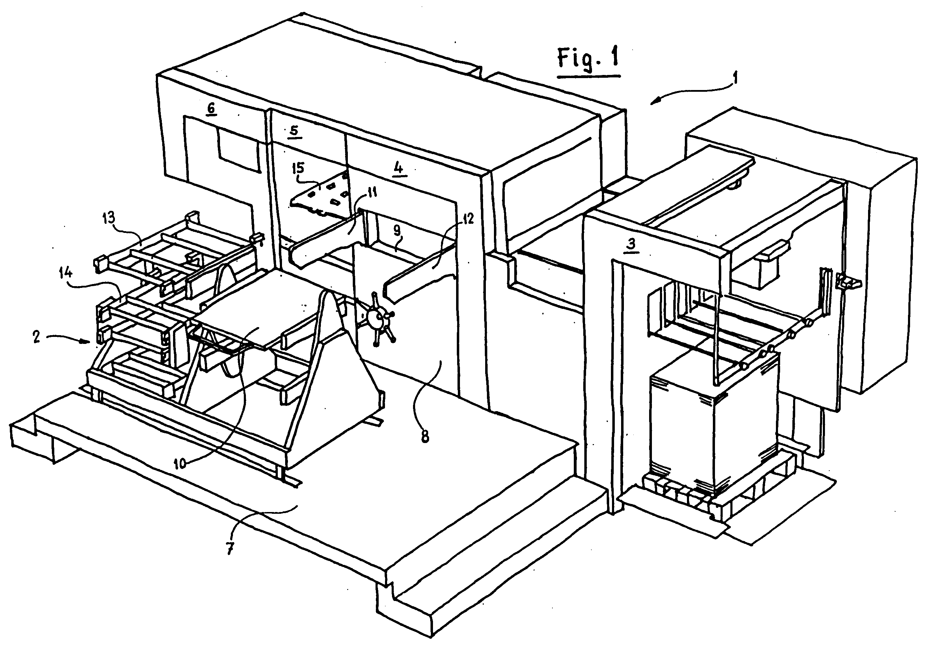

La figure 1 est une vue générale en perspective d'une presse à découper 1 équipée d'un dispositif de manutention et de réglage 2. La presse à découper 1 comprend généralement une station de marge 3, une station de découpage 4, une station d'éjection des déchets 5 et une station de réception 6. Pour pouvoir travailler de façon rationnelle autour de la presse à découper 1, on y adjoint un podium 7.

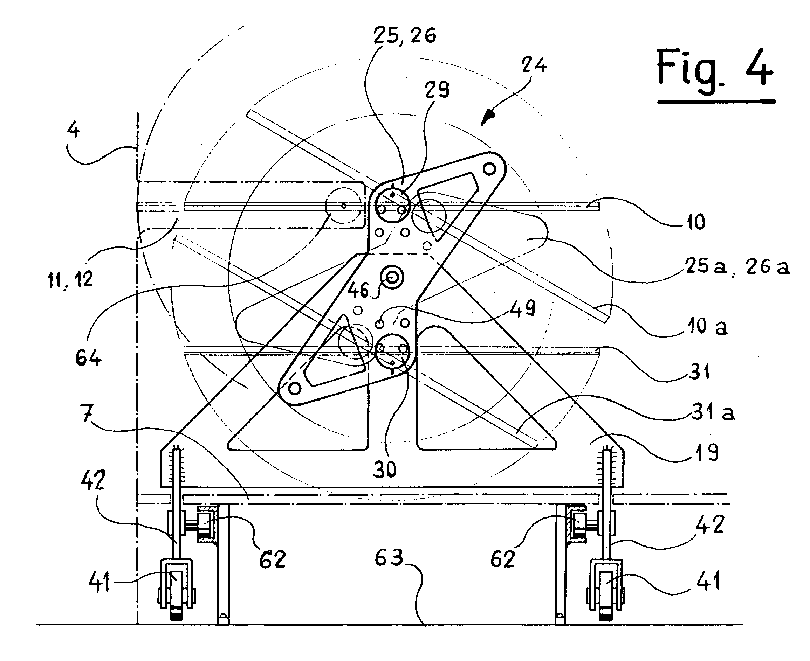

La station de découpage 4 comporte, dans sa face 8, une ouverture 9 destinée à laisser passer des outils de découpage 10 lors de leur introduction ou de leur retrait de la station de découpage 4. De chaque côté de cette ouverture 9 sont agencés deux bras 11 et 12. Ces bras 11 et 12 sont destinés à supporter les outils de découpage 10 lorsque on les introduit ou les retire de la station de découpage 4. Dans l'exécution représentée sur la figure 1, ces bras 11 et 12 sont fixés rigidement contre la face 8 de la station de découpage 4. Dans une autre version de la machine, ces bras 11 et 12 sont montés de façon à pouvoir être pivotés autour d'un axe situé au voisinage de la face 8. En règle générale, ces bras comportent encore, sur chacune de leurs faces intérieures deux coulisses superposées dans lesquelles s'engagent les bords latéraux des outils de découpage 10. L'extrémité des bras 11 et 12 éloignée de la face 8 comporte aussi un organe de fixation 64 à pivot autour duquel il est possible de faire tourner les outils de découpage 10 (voir figure 4), cela afin de réaliser sur ceux-ci des opérations de réglage ou de maintenance.

La station d'éjection des déchets 5 comprend un berceau supérieur mobile verticalement et un berceau inférieur également mobile verticalement. Elle comporte aussi un berceau central, mobile lui aussi, disposé entre les berceaux supérieur et inférieur. Les berceaux supérieur et inférieur sont munis de glissières destinées à recevoir respectivement l'outil supérieur d'éjection 13 et l'outil inférieur d'éjection 14 alors que le berceau central est destiné quant à lui à recevoir une planche ajourée 15 comportant des ouvertures réparti es sur sa surface en correspondance avec la position des déchets devant être éjectés.

Les presses à découper du type représenté sur la figure 1 sont destinées à réaliser un grand nombre de travaux différents et cela nécessite l'échange assez fréquent des outils de découpage 10 et d'éjection 13, 14 et 15. Ces outils de découpage 10 et d'éjection 13, 14 et 15, de forme plus ou moins rectangulaire, sont d'un maniement difficile en raison de leur format qui peut dépasser en surface l'ordre du mètre carré et même aller, pour certain format de machine, jusqu'à près de deux mètres carrés. Pour rendre ce maniement plus aisé et diminuer les pertes de temps lors de l'échange des outils de découpage et d'éjection, on utilise un dispositif de manutention et de réglage 2 pouvant se déplacer d'une position hors-service située à l'extérieur de la zone de service de la machine à une position en service située en face des bras 11 et 12 et de la station d'éjection des déchets 5.

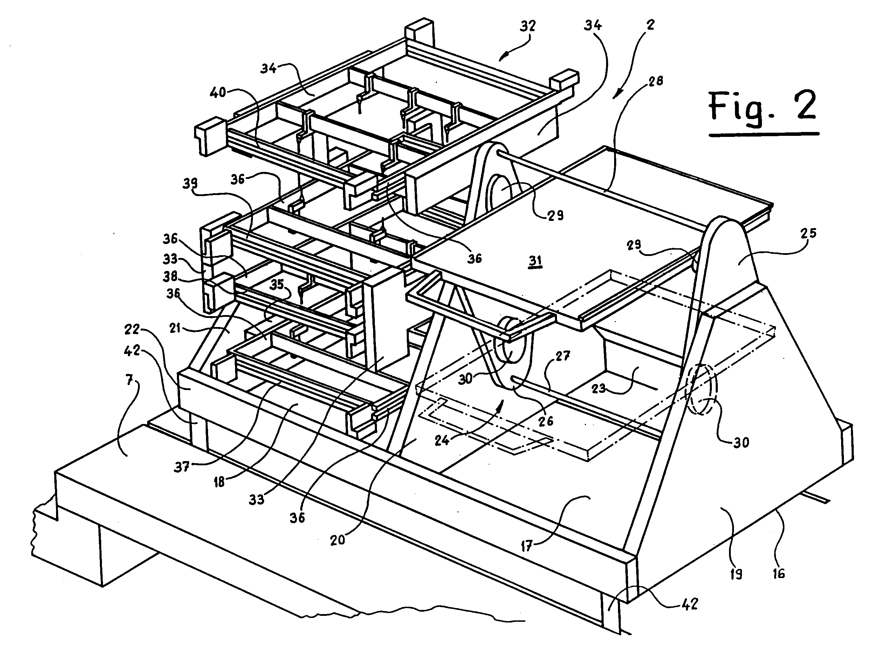

La figure 2 est une vue en perspective d'un dispositif de manutention et de réglage 2 comportant un bâti 16 agencé de façon à présenter deux zones d'opération soit une première zone d'opération 17 pour les outils de découpage et une seconde zone d'opération 18 pour les outils d'éjection. La première zone d'opération 17 est comprise entre la joue latérale droite 19 et la joue centrale 20 du bâti 16 et la seconde zone d'opération est comprise entre la joue latérale 21 et la joue centrale 20 du bâti 16. Les joues latérales droite et gauche 19 et 21 ainsi que la joue centrale 20 sont reliées entre elles, au voisinage de leur base, par deux entretoises 22 et 23. La première zone d'opération 17 est équipée d'un magasin rotatif 24 constitué par deux leviers pivotants 25 et 26 reliés entre eux par deux traverses 27 et 28. Les leviers pivotants 25 et 26 pivotent autour de paliers logés dans la partie supérieure de la joue latérale droite 19 et dans la partie supérieure de la joue centrale 20 du bâti 16. Chaque levier pivotant 25 et 26 est en outre muni de deux organes de fixation 29 et 30 à pivot disposés symétriquement par rapport à l'axe de rotation défini par les paliers logés dans les joues latérales droite 19 et centrale 20. Ces organes de fixation 29 et 30 sont destinés à recevoir d'une part, dans l'organe de fixation 29, l'outil de découpage de remplacement 31 qui sera introduit dans la station de découpage 4 en lieu et place de l'outil de découpage à échanger 10 (voir figure 1) qui sera quant à lui introduit dans l'organe de fixation 30 du magasin 24. Nous verrons plus avant dans la description le détail des opérations à réaliser pour effectuer ce remplacement des outils de découpage.

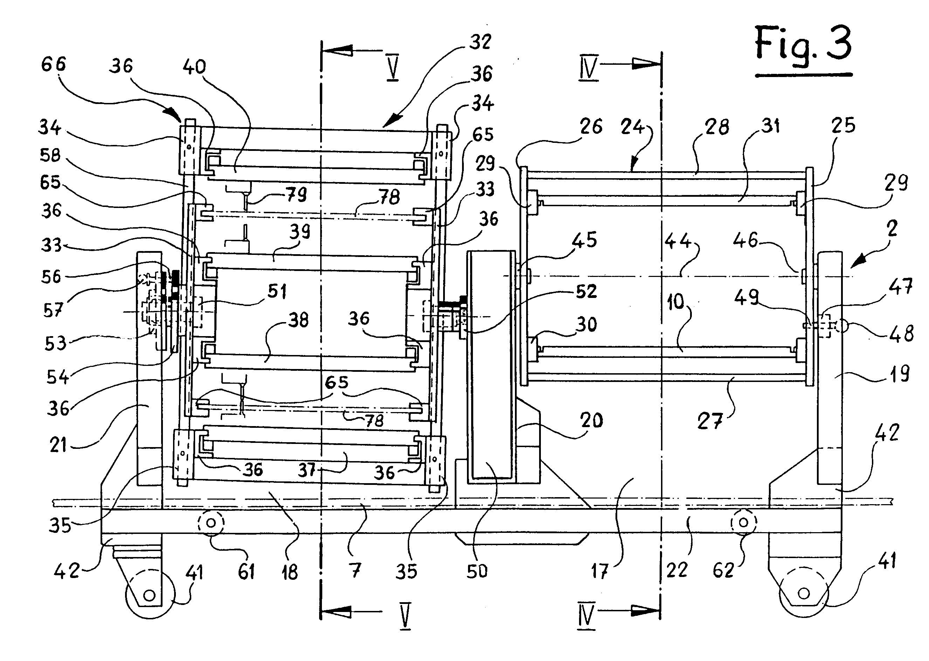

La deuxième zone d'opération 18 comporte elle aussi un magasin rotatif 32 constitué de plaques-support latérales 33, 34 et 35 équipées de coulisses 36 et 65 destinées à recevoir les cadres porte-outils d'éjection supérieurs et inférieurs 37, 38, 39 et 40 ainsi qu'une feuille de mise 78 destinée à faciliter le réglage de la position des aiguilles d'éjection supérieures 79. Les plaques-support latérales 33 sont munies de paliers autorisant leur rotation par rapport aux joues latérales gauche 21 et centrale 20. Les plaques-support latérales 34 et 35 sont quant à elles montées sur glissières pour permettre leur déplacement par rapport aux plaques-support 33. Une description plus détaillée de ce magasin rotatif 32 sera faite plus avant en référence avec les figures 3, 4 et 5. Enfin, le dispositif de manutention et de réglage 2 est équipé de roulettes 41 placées aux extrémités inférieures des pieds 42 du dispositif de manutention et de réglage 2 (voir figure 3) qui traversent le podium 7 à l'endroit des rainures aménagées dans celui-ci. Les rainures, sont ouvertes à l'une de leurs extrémités de façon à ce que tout le dispositif 2 puisse aisément être amené à sa position "en service" devant la machine ou retiré de cette position pour aller occuper une position "hors service" située au voisinage de la presse de découpage 1, dans un endroit où il ne gênera pas les déplacements des utilsateurs de celle-ci.

La figure 3 est une vue de face en élévation d'un dispositif de manutention et de réglage 2 représentant la disposition du magasin rotatif 24 pour les outils de découpage 10 et 31 dans sa zone d'opération 17 et la disposition du magasin rotatif 32 pour les outils d'éjection 37, 38, 39 et 40 dans sa zone d'opération 18. Ainsi que nous l'avons déjà indiqué dans la présente description, le magasin rotatif 24 est agencé pour pouvoir pivoter autour d'un axe 44 passant par le palier 46 logé dans la joue latérale droite 19 et par le palier 45 logé dans l'une des parois de la joue centrale 20. Ces paliers 45 et 46 supportent également les leviers pivotants 25 et 26 par leur milieu. La joue latérale droite 19 comporte un dispositif de verrouillage 47, de construction tout à fait conventionnelle, qui comprend un pigeonneau 48, muni d'une poignée, et qui s'engage dans des trous 49 aménagés dans le levier pivotant 25. Comme nous le verrons lors de la description de la figure 4, la disposition de ces trous 49 permettra de verrouiller le magasin 24 dans plusieurs positions lors du chargement ou du déchargement des outils de découpage. La joue centrale 20 est de plus réalisée à l'aide de tôles soudées de façon à constituer une zone de stockage 50 qui sera utilisée pour mettre en réserve certains éléments constituant les outils de découpage ou d'éjection.

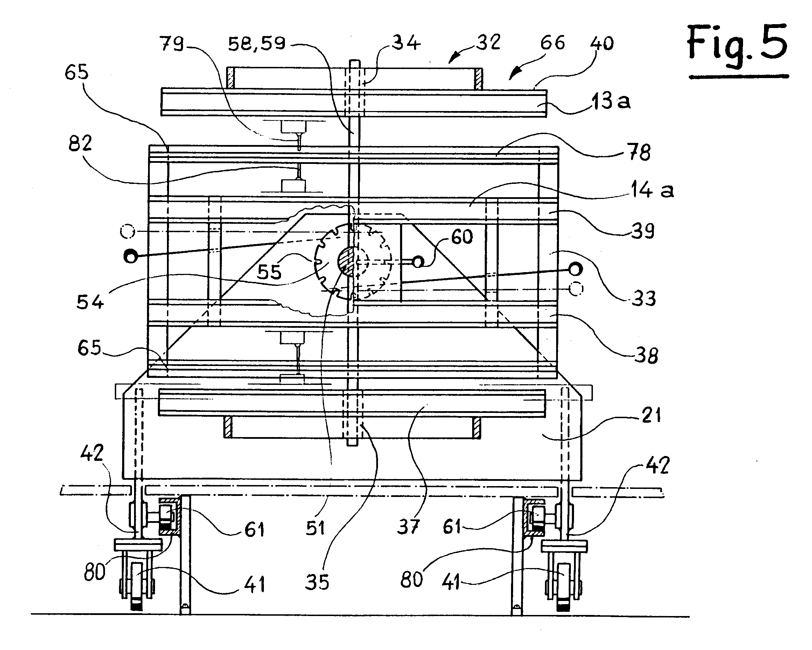

Le magasin rotatif 32 pour les outils d'éjection 37, 38, 39 et 40 est situé dans la zone d'opération 18 et il est agencé de manière à pouvoir tourner autour de deux pivots 51 maintenus dans un palier 52 fixé contre l'autre paroi de la joue centrale 20 et dans un autre palier 53 fixé contre la joue latérale gauche 21. Les plaques-support 33 sont solidaires des pivots 51, passant par leur milieu, et peuvent de ce fait tourner autour de ceux-ci. A son extrémité située au voisinage de la joue latérale gauche 21, l'un des pivots 51 est muni d'un flasque 54 percé de plusieurs encoches 55 (voir figure 5) dans lesquelles s'engage le pigeonneau 56 du dispositif de verrouillage 57 fixé quant à lui contre la joue latérale gauche 21. Le faux cadre 66 constitué par des coulisses 58 et 59 reliant les plaques-support 34 et 35 est monté, de façon à pouvoir se déplacer d'une première position extrême à une position médiane et à une deuxième position extrême, sur les plaques-support 33. Le faux cadre 66 peut être verrouillé dans chacune des positions qu'il va occuper au moyen d'un dispositif de verrouillage 60 (voir figure 5). Lorsque le dispositif 2 est en position "en service", il repose sur des rails 80 (représentés en traits mixtes) par l'intermédiaire de galets 61 et 62 de façon à ce que sa position verticale, par rapport aux stations de découpage et d'éjection, soit assurée. Dans cette position, les roulettes 41 ne touchent donc plus le sol 63 (voir figure 4).

La figure 4 est une vue en coupe selon IV-IV de la figure 3, dans laquelle on a représenté la position dans laquelle on doit déplacer rotativement le magasin 24 pour pouvoir extraire le dispositif 2 de sa position "en servi ce" pour pouvoir l'amener dans sa position "hors service" ou vice-versa. Pour ce faire, les leviers pivotants 25 et 26 seront déplacés dans la position 25a et 26a ce qui fera passer les outils de découpage 10 et 31 dans une position 10a et 31a leur permettant ainsi d'échapper, lorsqu'ils occupent cette position, aux bras 11 et 12 de la station de découpage 4, représentés ici en traits mixtes. Cette figure montre également la disposition des roulettes 41 et des galets 62 équipant les pieds 42 de la joue latérale droite 19. Il est à remarquer que les organes de fixation 29 et 30 sont identiques aux organes de fixation 64 portés par les bras 11 et 12 de la station de découpage 4 et que les outils de découpage 10 et 31 peuvent de ce fait être déplacés angulairement aussi bien sur la station de découpage 4 que sur le dispositif de manutention et de réglage 2. Ces fonctions seront décrites plus en détail lors de l'explication du fonctionnement du dispositif.

La figure 5 est une vue en coupe sel on V-V de la figure 3, dans laquelle on a représenté la position des différents outils d'éjection 37, 38, 39 et 40 ainsi que la feuille de mise 78 dans le magasin rotatif 32. Les outils supérieurs d'éjection 37 et 40 sont montés dans leurs coulisses respectives 36 sur le faux cadre 66 alors que les outils d'éjection inférieurs 38 et 39 sont montés dans les coulisses 36 des cadres-support 33. La feuille de mise 78 est quant à elle introduite dans des glissières 65.

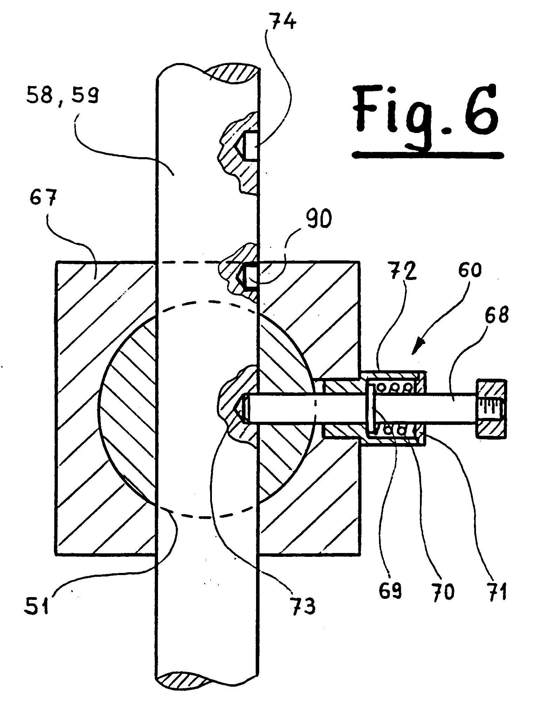

La figure 6 est une vue en coupe partielle du dispositif de verrouillage 60 du faux cadre 66 par rapport aux cadres-support 33. Les coulisses 58 et 59 sont guidées dans des blocs-paliers 67 fixés contre les cadres-support 33. L'un ou l'autre des blocs-paliers 67 est équipé du dispositif de verrouillage 60 qui comporte un pigeonneau 68 muni d'une collerette 69 servant de point d'appui pour un ressort 70 retenu par le couvercle 71 du corps de verrou 72 vissé quant à lui dans le bloc palier 67. L'extrémité du pigeonneau 68 s'engage dans un perçage 73, correspondant à une première position extrême, usiné dans la coulisse 58. Celle-ci comporte encore un second perçage 90 permettant d'assurer la position médiane du faux cadre 66 ainsi qu'un troisième perçage 74 de manière à assurer la seconde position extrême du faux cadre 66.

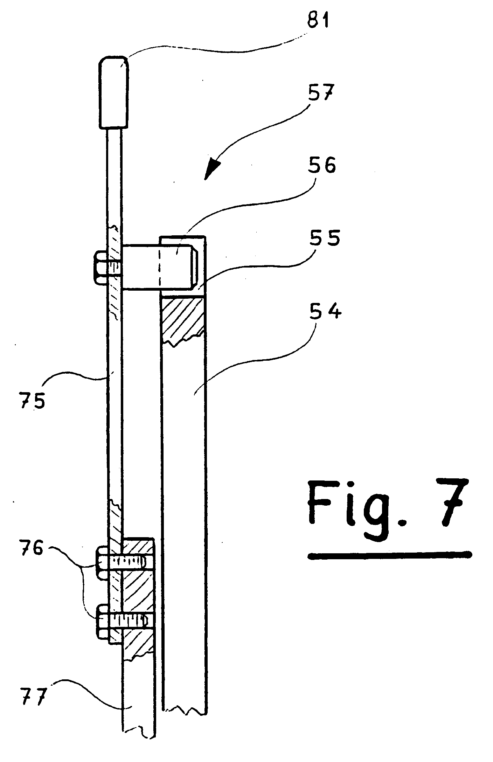

La figure 7 montre une forme d'exécution du dispositif de verrouillage 57 permettant d'assurer la position angulaire du magasin rotatif 32. Ce dispositif comprend un pigeonneau 56 vissé contre une lame ressort 75 fixée par des vis 76 à une patte 77 de la joue latérale gauche 21. Cette lame ressort 75 est équipée d'une poignée 81. Le pigeonneau 56 s'engage dans l'une des encoches 55 du flasque 54 pour bloquer le magasin rotatif 32 dans la position désirée.

Ainsi que cela a déjà été mentionné plus haut dans le texte, il est nécessaire de procéder à l'échange des outils de découpage 10 et des outils d'éjection supérieurs et inférieurs 13 et 14 lorsque l'on désire effectuer un travail différent avec la presse à platines 1 ou alors lorsqu'il faut remplacer des outils usés ou détériorés. Pour effectuer cette opération d'échange des outils de découpage et d'éjection, l'utilisateur prépare le dispositif de manutention et de réglage à l'extérieur de la presse à découper 1. Il prépare un premier outil de découpage 31 sur l'organe de fixation 30 du magasin rotatif 24. Il actionne ensuite les leviers pivotants 25 et 26 d'un angle de 30° de façon à ce que l'outil de découpage 31 vienne occuper la position 31a de la figure 4. A cet instant, l'organe de fixation 29 ne supportera aucun outil de découpage. Ensuite, il prépare un outil supérieur d'éjection 13a dans le cadre porte-outils 40 et il introduit la feuille de mise 78 dans ses glissières 65. l'outil supérieur d'éjection 13a ainsi que la feuille de mise 78 seront bloqués dans le cadre porte-outils 40 et dans les glissières 65. L'opérateur va ensuite positionner chacune des aiguilles d'éjection supérieures en fonction de la configuration des déchets qui sera donnée par l'aspect de la feuille de mise 78. Pour effectuer ce réglage de la position des aiguilles d'éjection, le faux cadre 66 occupera une position médiane telle qu'elle est représentée à la figure 6 (troisième perçage 90). Les aiguilles supérieures d'éjection 79 ayant été réglées, la feuille de mise, appartenant à l'outil de découpage 13a, sera retirée de ses glissières et stockée dans la zone de stockage 50. Un outil inférieur d'éjection 14a sera dès lors préparé. Celui-ci sera verrouillé dans le cadre porte-outils inférieur 39 avant que l'on déverrouille le faux cadre 66 pour l'amener dans sa position inférieure et que l'on monte les aiguilles d'éjection inférieures 82 en regard des aiguilles d'éjection supérieures 79 préalablement bloquées dans leur position de travail correspondant à la position des déchets à éjecter. Pour terminer, on déverrouille le magasin rotatif 32 en agissant sur le dispositif de verrouillage 57 et on le fait tourner de 180 ° de façon à amener les coulisses 36 et les glissières 65 de l'autre moitié du magasin 34 dans la position précédemment occupée par les outils d'éjection que l'on vient de régler. Le dispositif de manutention et de réglage est alors prêt en vue de son utilisation pour échanger les divers outils qui actuellement sont en cours d'utilisation dans la presse à découper 1. Pour rappel, on notera que toutes ces opérations de préparation du dispositif 2, c'est à dire le réglage des différents outils on été effectuées en dehors de l'espace d'utilisation de la presse de découpage 1 qui peut continuer de travailler sans arrêt. Le travail en cours étant terminé, la presse sera stoppée et l'on libérera les outils de découpage et d'éjection 10, 13 et 14 utilisés que l'on doit remplacer. Ces outils seront extraits incomplètement de la presse et on amènera le dispositif 2 devant les stations de découpage 4 et d'éjection 5 en l'introduisant dans les rainures 43 du podium 7. Le magasin 24 sera pivoté de 30° dans le sens contraire des aiguilles d'une montre de telle sorte que le plan de chargement des outils de découpage soit horizontal. Les parties supérieures des magasins 24 et 32 étant libres de tout outil, il sera aisé de transférer sur celles-ci les outils à remplacer. Une fois que l'outil de découpage 10 est verrouillé en position sur les organes de fixation 30, on fait effectuer une rotation de 30°, dans le sens des aiguilles d'une montre, au magasin rotatif 24 de façon à ce que le dispositif 2 puisse être déplacé par la suite, parallèlement par rapport à la presse de découpage 1, et que l'outil de découpage 10 à échanger et le nouvel outil de découpage 31 ne viennent pas buter contre les bras 11 et 12 de la station de découpage 4. Immédiatement après, on procédera au chargement, sur le magasin rotatif 32, des outils d'éjection 13 et 14 utilisés. Il seront verrouillés dans leurs cadres porte-outils 37 et 38. On retirera complètement le dispositif 2 de devant la presse à découper 1. La place devant les stations de découpage 4 et d'éjection 5 étant libérée, on pourra dès lors échanger l'ancienne planche ajourée 15 par une nouvelle, prise de la zone de stockage 50. On pourra également, à cet instant échanger la plaque à découper, non représentée, de l'outil de découpage utilisé 10. La nouvelle plaque à découper sera elle aussi prise de la zone de stockage 50 qui contiendra alors l'ancienne planche ajourée 15 et l'ancienne plaque à découper. On fera subir au magasin rotatif 32 une première rotation de 90° dans le sens des aiguilles d'une montre. Dans cette position, le faux cadre 66 sera déplacé à nouveau de façon à ce que l'écartement entre les nouveaux outils d'éjection 13a et 14a corresponde à l'écartement des berceaux de la station d'éjection 5 de la presse à découper devant les recevoir. Une deuxième rotation de 90°,dans le même sens, sera alors appliquée au magasin rotatif 32. Le dispositif 2 sera ramené en face des stations de découpage 4 et d'éjection 5 de la presse à découper 1. Le magasin 24 sera à nouveau pivoté de 30° dans le sens inverse des aiguilles d'une montre et l'on pourra alors introduire successivement en machine les nouveaux outils de découpage 31 et d'éjection 13a et 14a. Le magasin rotatif 24 ayant été ramené dans sa position angulaire primitive, le dispositif 2 sera totalement retiré de devant la presse, et l'on pourra compléter l'introduction en machine des nouveaux outils de découpage et d'éjection, puis on les verrouillera dans leurs positions de travail respectives. La presse pourra alors recommencer de fonctionner avec le nouveau travail et pendant la durée prise par celui-ci, il sera possible avec l'aide du dispositif 2 de préparer un autre travail à effectuer.

## Revendications

1. Dispositif pour la manutention et le réglage des outils d'une presse à découper du papier ou du carton, notamment pour la manutention des outils (10, 13, 14, 15) de la station de découpage (4) et pour la manutention et le réglage des outils de la station d'éjection (5) de ladite presse à platines, comprenant un chariot déplaçable devant celle-ci, caractérisé en ce qu'il comprend un bâti (16) présentant une première zone d'opération (17), pour les outils de la station de découpage (4), comprise entre une joue latérale droite (19) et une joue centrale (20) ainsi qu'une seconde zone d'opération (18), pour les outils de la station d'éjection (5), comprise entre la joue centrale (20) et une joue latérale gauche (21), la première zone d'opération (17) étant équipée d'un magasin rotatif (24) pour les outils de la station de découpage (4), la seconde zone d'opération (18) étant quant à elle équipée d'un autre magasin rotatif (32) pour les outils de la station d'éjection (5) et en ce que l'ensemble ainsi constitué est déplaçable parallèlement devant la presse à découper d'une position hors service de préparation et de réglage à une position en service de chargement et de déchargement des outils des stations de découpage (4) et d'éjection (5).

2. Dispositif selon la revendication 1, caractérisé en ce que le magasin rotatif (24) est constitué par deux leviers pivotants (25, 26) reliés entre eux et équipés chacun de deux organes de fixation (29, 30) destinés à recevoir les outils de la station de découpage (4), ledit magasin rotatif (24) pouvant être verrouillé dans des positions déterminées par les conditions de chargement, de déchargement et de préparation des outils de la station de découpage (4).

3. Dispositif selon la revendication 1, caractérisé en ce que l'autre magasin rotatif (32) est constitué de plaques-support latérales (33, 34 et 35), deux de ces plaques-support latérales (33) étant équipées de paliers (52, 53) et de pivots (51) pour permettre la rotation du magasin rotatif (32) par rapport aux joues latérale gauche (21) et centrale (20), les autres plaques-support (34, 35) étant solidaires d'un faux cadre (66) déplaçable et verrouillable dans une position médiane et dans deux positions extrêmes.

4. Dispositif selon la revendication 3, caractérisé en ce que les plaques-support latérales (33, 34 et 35) sont équipées de coulisses (36, 65) destinées à recevoir des cadres porte-outils d'éjection supérieurs et inférieurs (37, 38, 39 et 40).

5. Dispositif selon la revendication 3, caractérisé en ce que l'un des pivots (51) de l'une des deux plaques-support latérales (33) est muni d'un flasque (54) percé d'encoches (55) dans lesquelles s'engage un pigeonneau (56) d'un dispositif de verrouillage (57) permettant le blocage en rotation du magasin rotatif (32) et en ce que le faux cadre (66) est constitué par des coulisses (58, 59) guidées dans des blocs-paliers (67) dont l'un est muni d'un dispositif de verrouillage (60) permettant le blocage en position linéaire du faux cadre (66) dans ses positions médiane et extrêmes.

## Claims

1. Device for handling and positioning tools of a platen press for processing paper or cardboard, more particularly for handling tools (10, 13, 14, 15) of the cutting station (4) and for handling and positioning tools (4) of the stripping station (5) of said platen press, comprising a movable carriage in front of the latter, characterized by the fact that it comprises a frame (16) having a first operating area (17), for the tools of the cutting station (4), comprised between a right lateral guide (19) and a central guide (20) as well as a second operating area (18), for the tools of the stripping station (5), comprised between the central guide (20) and a left lateral guide (21), the first operating area (17) being equipped with a rotating magazine (24) for the tools of the cutting station (4), the second operating area (18) being equipped with another rotating magazine (32) for the tools of the stripping station (5) and by the fact that the assembly thus made up is parallely movable in front of the platen press from an inoperative position of preparing and positioning to an operative position of loading and unloading the tools of the cutting (4) and stripping (5) station.

2. Device according to claim 1, characterized by the fact that the rotating magazine (24) consists of two pivoting levers (25, 26) interconnected and each equipped with two fixing members (29, 30) adapted to receive the tools of the cutting station (4), said rotating magazine (24) being lockable in positions determined by the loading, unloading and preparing conditions of the tools of the cutting station (4).

3. Device according to claim 1, characterized by the fact that the other rotating magazine (32) consists of lateral supporting plates (33, 34 and 35), two of these lateral supporting plates (33) being equipped with bearings (52, 53) and pivots (51) in order to rotate the rotating magazine (32) with respect to the left lateral (21) and the central (20) guides, the other supporting plates (34, 35) being fixedly attached to a false frame (66) movable and lockable in a median position and in two end positions.

4. Device according to claim 3, characterized by the fact that the lateral supporting plates (33, 34 and 35) are equipped with slides (36, 65) adapted to receive the upper and lower stripping tool supporting frames (37, 38, 39 and 40).

5. Device according to claim 3, characterized by the fact that one of the pivots (51) of one of the two lateral supporting plates (33) is provided with a flange (54) tapped with notches (55) in which a retractable pin (56) of a locking device (57) engages allowing the locking in rotation of the rotating magazine (32) and by the fact that the false frame (66) consists of slides (58, 59) guided in bearing blocks (67) one of which is provided with a locking device (60) allowing the locking in linear position of the false frame (66) in its median and end positions.

## Patentansprüche

1. Vorrichtung zum Handhaben und Ausrichten von Werkzeugen einer Stanztiegelpresse zur Verarbeitung von Papier oder Karton, insbesondere zum Handhaben von Werkzeugen (10, 13, 14, 15) der Stanzstation (4) und zum Handhaben und Ausrichten von Werkzeugen der Ausbrechstation (5) der besagten Stanztiegelpresse, einen vor dieser angeordneten, verschiebbaren Wagen umfassend, dadurch gekennzeichnet, dass sie einen Rahmen (16) umfasst, welcher einen ersten Arbeitsbereich (17) für die Werkzeuge der Stanzstation (4), der zwischen einer rechten Seitenwange (19) und einer zentralen Wange (20) liegt, sowie einen zweiten Arbeitsbereich (18) für die Werkzeuge der Ausbrechstation (5), welcher zwischen der zentralen Wange (20) und einer linken Seitenwange (21) liegt, aufweist, wobei der erste Arbeitsbereich (17) mit einem Drehmagazin (24) für die Werkzeuge der Stanzstation (4), und der zweite Arbeitsbereich (18) mit einem anderen Drehmagazin (32) für die Werkzeuge der Ausbrechstation (5) ausgestattet sind, und dass die so zusammengesetzte Einheit von einer Ausserbetriebsstellung zur Vorbereitung und zum Ausrichten in eine Betriebsstellung zum Aufladen und Abladen von Werkzeugen der Stanz- (4) und Ausbrechstationen (5) vor der Stanztiegelpresse parallel verschiebbar ist.

2. Vorrichtung gemäss Patentanspruch 1, dadurch gekennzeichnet, dass das Drehmagazin (24) aus zwei Drehhebeln (25, 26) besteht, welche miteinander verbunden und jeder mit zwei Befestigungsorganen (29, 30) ausgestattet ist, um die Werkzeuge der Stanzstation (4) aufzunehmen, wobei dieses Drehmagazin (24) in Stellungen verriegelt werden kann, welche durch die Aufadungs-, Abladungs- und Vorbereitungsbedingungen der Werkzeuge der Stanzstation (4) festgelegt sind.

3. Vorrichtung gemäss Patentanspruch 1, dadurch gekennzeichnet, dass das andere Drehmagazin (32) aus seitlichen Stützplatten (33, 34 und 35) besteht und zwei dieser seitlichen Stützplatten (33) mit Lagern (52, 53) und Drehzapfen (51) ausgestattet sind, um die Drehung des Drehmagazins (32) in bezug auf die linke Seitenwange (21) und die zentrale Wange (20) zu ermöglichen, wobei die anderen Stützplatten (34, 35) mit einem falschen Rahmen (66) fest verbunden sind, welcher in eine Mittelstellung und zwei Endstellungen verschiebbar und dort verriegelbar ist.

4. Vorrichtung gemäss Patentanspruch 3, dadurch gekennzeichnet, dass die seitlichen Stützplatten (33, 34 und 35) mit Gleitschienen (36, 65) ausgestattet sind, um obere und untere Ausbrechwerkzeugrahmen (37, 38, 39 und 40) aufzunehmen.

5. Vorrichtung gemäss Patentanspruch 3, dadurch gekennzeichnet, dass einer der Drehzapfen (51) von einem der zwei seitlichen Stützplatten (33) mit einem Flansch (54) versehen ist, der von Kerben (55) durchbohrt ist, in welche ein Stift (56) einer Verriegelungsvorrichtung (57) eingreift, welche erlaubt, die Drehung des Drehmagazins (32) zu blockieren, und dass der falsche Rahmen (66) aus Gleitschienen (58, 59) besteht, welche in Lagerblocks (67) geführt werden, wobei einer von letzteren mit einer Verriegelungsvorrichtung (60) versehen ist, die erlaubt, die lineare Stellung des falschen Rahmens (66) in seinen Mittel- und Endstellungen zu blockieren.
